# EUROPEAN PATENT SPECIFICATION

(11) **EP 0 486 163 B1**
(45) Date of publication and mention of the grant of the patent: **20.07.1994**
(21) Application number: 91309664.0
(22) Date of filing: 18.10.1991
(51) Int. Cl.: B60J 10/00, B60J 10/04, B60S 1/04

(54) **Sealing and wiping arrangement**
Dichtungs- und Reinigungsvorrichtung
Dispositif d'étancheité et de nettoyage

(30) Priority: 13.11.1990 GB 9024628; 16.02.1991 GB 9103334
(43) Date of publication of application: 20.05.1992
(73) Proprietor: DRAFTEX INDUSTRIES LIMITED, Edinburgh, EH3 6YY, Scotland (GB)
(72) Inventor: Maass, Klaus Peter, W-4060 Viersen 12 (DE)
(74) Representative: Foster, David Martyn

(56) References cited:
- EP-A- 0 036 178
- WO-A-88/09594
- FR-A- 2 555 650
- FR-A- 2 633 660
- FR-A- 2 636 027
- GB-A- 950 062
- US-A- 3 452 384
- US-A- 4 105 248

## Description

### SEALING AND WIPING ARRANGEMENT

The invention relates to a sealing and wiping arrangement for a movable window glass, comprising a sealing element mounted for movement between a sealing position in which it sealingly contacts the surface of the window glass and a non-sealing position in which it is out of sealing contact with the window glass, a wiping element positioned adjacent to the surface of the window glass and movable between a wiping position in which it is in wiping contact with the window glass and a non-wiping position in which it is not in wiping contact with the window glass, and element control means for moving the sealing element and the wiping element between their respective said positions.

Such an arrangement is known from FR-A-633 660. In this arrangement a sealing lip is flexibly mounted adjacent to the movable window glass. A more rigid arm depends downwardly from the sealing element and has a flocked portion which slides wipingly in contact with the moving window glass. The window glass carries a strip of rigid material glued to it which acts as a cam during the final stage of upward movement of the window glass, making contact with the rigid depending arm to generate a force which moves the flocked area of the arm out of wiping contact with the window glass and simultaneously flexes the sealing lip into sealing contact with the window glass. A disadvantage of this arrangement is that either the flocked wiping area of the rigid arm or the sealing lip is always in contact with the window glass. Therefore, during movement of the window glass between its upper and lower positions, the flocked area of the rigid arm is continuously in contact with the glass surface. Any dirt or moisture will thus be smeared over the surface of the glass in an unsatisfactory manner. Raising and lowering of the glass is also impeded by the friction of the continuous contact. The invention aims to overcome these problems.

According to the invention, therefore, the known arrangement is characterised in that the element control means comprises separate sealing element control means and wiping element control means, the sealing element control means being operable for moving the sealing element between the sealing and non-sealing positions and the wiping element control means being operable for moving the wiping element between the wiping and non-wiping positions, the sealing element control means and the wiping element control means being selectively operable independently of each other.

The invention thus enables the window glass to be raised or lowered without risk of smearing dirt or moisture over its surface and with the minimum of friction. The wiping element provided by the invention is considered to optimise its wiping operation and, because it is controllable independently of the sealing lip, its operation can more easily be integrated with other operations such as the raising and lowering of the window glass.

Further developments in line with claim 1 are referred to in the dependent claims 2 to 16.

Sealing and wiping arrangements embodying the invention will now be described, by way of example only, with reference to the accompanying diagrammatic drawings in which:
Figure 1 is a diagrammatic cross-section through one of the arrangements, in a sealing and non-wiping position;
Figure 2 corresponds to Figure 1 but shows the arrangement in a non-wiping and non-sealing position; and
Figure 3 corresponds to Figure 1 but shows the arrangement in a wiping and non-sealing position.

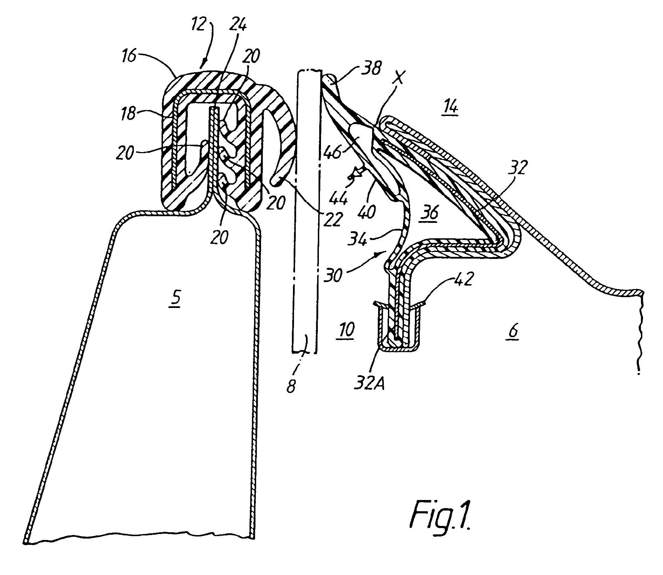

Figure 1 shows the inner and outer panels 5,6 of the lower part of a vehicle door, whose upper part is formed to provide the normal window opening which is closable by a vertically slidable pane of glass 8 the latter being raisable from and lowerable into the hollow lower part of the door. As it is raised and lowered, the window pane 8 passes through a gap 10 between the inner and outer panels of the door.

In order to provide effective weatherproof sealing at this point, the inner and outer panels of the door carry sealing strips 12 and 14.

The sealing strip 12 is of conventional form. As shown, it is in the form of a channel-shaped gripping part 16 which is formed from plastics or rubber material extruded over a channel-shaped embedded metal carrier 18. The metal carrier 18 may take any suitable form. For example, it may be a simple metal channel. Instead, it may be a slitted or slotted metal channel. It may be made up of U-shaped metal elements arranged side-by-side to define a channel and either interconnected by short connecting links or entirely disconnected. Instead, it could be made of looped wire. However, other forms of carrier are possible.

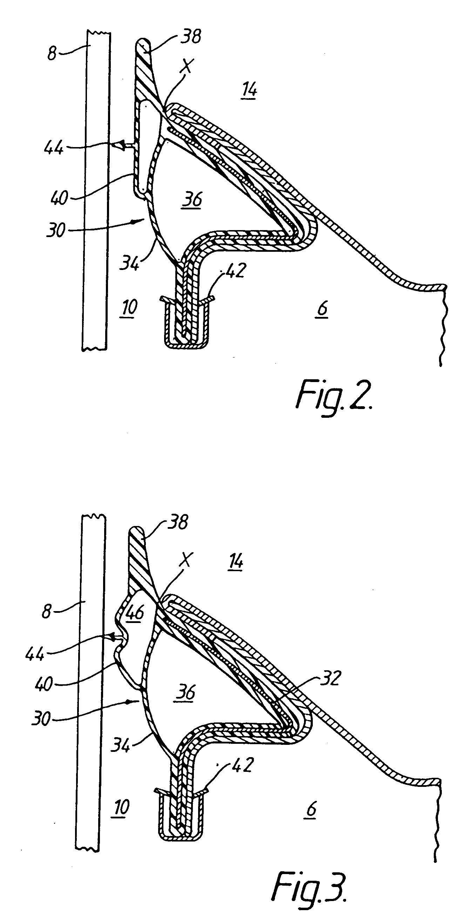

The extruded plastics or rubber material is extruded with integrally formed gripping lips 20 and a larger sealing lip 22 on the outside of the channel. The sealing strip 12 is arranged embracingly to grip a flanged joint 24 which is formed where the metal sheets forming the inner panel 5 of the door come together. In this way, therefore, the sealing strip 12 supports the lip 22 so that it bears sealingly into engagement with the slidable glass panel 8. Strip 12 is omitted from Figures 2 and 3.

The sealing strip 14 is mounted within a generally triangular-shaped recess 30 formed in the outer panel 6 of the door. The strip 14 comprises a metal carrier 32 which is shaped to follow the configuration of the recess 30 but with a downwardly depending part 32A. The carrier 32 may be formed from an unapertured metal blank, though could be slit or slotted. It is covered by extruded plastics or rubber material. The plastics or rubber material is extruded so as to cover and follow the shape of the metal carrier 32 but to provide, in addition, a flexible wall portion 34 defining a hollow closed chamber 36. In addition, the extruded material defines an extended relatively flexible lip 38 having a leg 40 which is anchored along approximately the centre line of the flexible wall portion 34.

The extruded plastics or rubber material need not all be the same hardness. For example, the extruded material following the shape of the metal carrier 32 may be relatively hard and stiff. However, the material defining at least the distal edge of the lip 38, and the flexible wall 34, may be softer and more flexible.

The strip 14 is fixed in position such as by metal clips or suitable fasteners spaced at intervals along the length of the strip such as positioned and shown at 42. Instead, the sealing strip could be fixed in position by any other suitable method.

The surfaces of the lips 22,38 in engagement with the glass may be covered with flock or other suitable low friction material.

The hollow interior 36 of the strip 14 is connected (by means not shown) to a vacuum pump and is sealed in an air-tight manner.

As so far described, the strips 12,14 are similar to the strips disclosed in co-pending United Kingdom patent application GB-A- 2 221 487.

In addition, however, the sealing strip 14 carries a wiper 44 which is made of plastics or rubber material and is integrally extruded with the remainder of the plastics or rubber material. As shown, it protrudes externally from the flexible wall portion 40 towards the window pane 8 and is of arrow-head form, extending along the full width of the sealing strip which in turn extends across substantially the full width of the window pane 8. Wall portion 40 is relatively flexible and constitutes one wall of a second hollow air-tight chamber 46. The hollow chamber 46 is, like the chamber 36, connected to the vacuum pump, though is controlled separately from the hollow chamber 36.

Figure 1 shows the seal 14 in its operative or sealing configuration. In this configuration, the hollow chamber 36 is partially evacuated by the vacuum pump. This results in the flexible wall 34 being drawn inwardly of the chamber 36 so as to assume the form illustrated in Figure 1 and thus to exert a pulling force on the wall 40. This causes the lip 38 to pivot in an anti-clockwise direction about the pivot point X and thus to be drawn into relatively tight sealing engagement with the facing surface of the glass pane 8. A very effective weatherproof seal is therefore provided.

In addition, chamber 46 is also partially evacuated. The resultant movement of wall 40 inwardly of the chamber 46 causes the wiper 46 to be held spaced from the window pane 8.

In Figure 2, the air pressure in chamber 36 has returned to atmospheric pressure, or, possibly, has increased above atmospheric pressure. The flexible wall 34 is thus forced outwardly and lip 38 has thus pivoted in a clockwise direction about the point X and has moved clear of the window glass. However, chamber 46 is still partially evacuated so that wiper 44 is also clear of the window glass.

In this way, the sealing of the window pane 8 can be temporarily disconnected - by moving the lip 38 out of contact with the window glass 8 - by operation of the vacuum pump. The window glass 8 can thus readily be raised and lowered.

However, during such raising and lowering movement, the wiper 44 can be brought into engagement with the face of the window glass 8 to carry out a wiping action similar to that of a windscreen or windshield wiper and clears the glass of moisture. This is shown in Figure 3 which shows the situation when the chamber 46 is returned to atmospheric pressure or, possibly, has increased above atmospheric pressure. Wall 46 is thus pressed outwardly and places the wiper 44 into wiping engagement with the window glass. Because the wiper 44 is mounted on the flexible wall 40, it can flex upwardly with the glass as the glass moves upwardly and downwardly with the glass when the glass moves downwardly. In this way, therefore, the face of the window glass is cleared of moisture and smears.

When window raising, lowering and wiping has been completed, the vacuum pump is operated so as partially to evacuate the hollow chambers 36 and 46. In the manner explained, the lip 38 thus moves back into sealing engagement with the window glass and wiper 44 moves away from the window glass.

Therefore, there is minimum resistance to movement of the window glass and effective cleaning of the window glass during such movement, and maximum sealing effect when the movement stops.

The operation of the vacuum pump could be controlled manually. Instead, however, it can be controlled in sequence with the window raising and lowering mechanism (whether such mechanism is manual or powered).

In a modified version, a strip similar to the strip 14 but of mirror-image form could be positioned on the inside of the window glass 8 instead of strip 12.

In a modification, a washer jet is suitably positioned so as to direct a jet of water at the outer face of the window glass, adjacent to the sealing lip 38. The jet of water is used to wash the window glass and can be controlled so as to be operable (either manually, such as by a button located adjacent to the control for electrically operating the window, or automatically) when the window is closed. The washer jet could be adjacent to the strip, or carried by the wiping element itself, or could be positioned elsewhere such as incorporated in the housing of the external rear view mirror when for a front side window of a vehicle.

Advantageously, the positions of the lip 38 and the wiper 44, together with the operation of the water jet, would all be interlinked with the movement of the window glass. Thus, when the window glass is in the closed position, the lip 38 would be in contact with the window glass and the wiper 44 would not be in contact. With the window closed, the washer jet can be operated. The lip 38 would then be withdrawn from the window glass and the window then be lowered. The wiper 44 would then be placed in contact with the glass 8 (as shown in Figure 3) and the window glass raised to clean the glass. If the window movement was stopped, either before it reached the fully open position, or when it has reached that position, the lip 38 would then be moved back into contact with the window glass and the wiper 44 withdrawn (the Figure 1 situation). The washer would be prevented from being operated in the open or partially open position.

The construction of the sealing strip 14 is shown merely by way of example. Other forms are possible, such as, for instance, the form shown in Figures 3 and 4 of the above-mentioned co-pending United Kingdom patent application, but modified so as to carry a wiper corresponding to the wiper 44.

In a further modification, the wiper 44 need not be attached to the strip 14. Instead, it could be positioned separately from the strip 14 and either arranged to be permanently in contact with the window glass 8 or moved into and out of such contact by separate means.

Although the arrangements illustrated have shown the lip 38 and the wiper 44 as being moved by the effect of changing air pressure on flexibly-walled chambers, alternative arrangements are possible in which the lip and/or the wiper are moved by some other means such as electrically or magnetically or electro-magnetically.

Advantageously , the sealing lip 38 incorporates an electrical heating wire by means of which it and the window can be de-iced. Instead, warm air could be introduced to the window glass for the same purpose.

## Claims

1. A sealing and wiping arrangement for a movable window glass (8), comprising a sealing element (38) mounted for movement between a sealing position in which it sealingly contacts the surface of the window glass (8) and a non-sealing position in which it is out of sealing contact with the window glass (8), a wiping element (44) positioned adjacent to the surface of the window glass (8) and movable between a wiping position in which it is in wiping contact with the window glass and a non-wiping position in which it is not in wiping contact with the window glass, and element control means (36,46) for moving the sealing element (38) and the wiping element (44) between their respective said positions, characterised in that the element control means comprises separate sealing element control means (36) and wiping element control means (46), the sealing element control means (36) being operable for moving the sealing element (38) between the sealing and non-sealing positions and the wiping element control means (46) being operable for moving the wiping element (44) between the wiping and non-wiping positions, the sealing element control means (36) and the wiping element control means (46) being selectively operable independently of each other.

2. An arrangement according to claim 1, characterised in that the sealing element (38) is flexibly mounted adjacent means defining a hollow chamber (36) whose shape is alterable by altering the pressure of a fluid therewithin, and by means (40) mechanically connecting the sealing element (38) with a part (34) which moves in response to the shape alteration of the hollow chamber (36) whereby to transmit a mechanical force to the sealing element (38) so as to cause it to move on its flexible mounting (X) between the sealing and non-sealing positions, and in that the sealing element control means comprises means for altering the pressure of the fluid within the hollow chamber (36).

3. An arrangement according to claim 2, characterised in that the said part (34) in the flexible wall of the hollow chamber (36).

4. An arrangement according to any preceding claim, characterised in that the wiping element (44) is selectively mounted adjacent means defining a hollow chamber (46) whose shape is alterable by altering the pressure of a fluid therewithin, and by means mechanically connecting the wiping element (44) with a part (40) which moves in response to the shape alteration of this hollow chamber (46) whereby to transmit a mechanical force to the wiping element (44) to cause it to move on its flexible mounting between the wiping and non-wiping positions, and in that the wiping element control means comprises means for altering the pressure of the fluid within this hollow chamber (46).

5. An arrangement according to claim 2 or 3, characterised in that the hollow chamber (36) extends longitudinally along the length of the sealing element (38).

6. An arrangement according to claim 4, characterised in that the hollow chamber (46) adjacent to which is mounted the wiping element (44) extends longitudinally along the length of the sealing element (38).

7. An arrangement according to claim 5 or 6, characterised in that the or each hollow chamber (36,46) is made of extruded plastics or rubber material.

8. An arrangement according to claim 1, characterised in that each of the sealing element control means (36) and the wiping element control means (46) comprises electrical or magnetic means.

9. An arrangement according to any preceding claim, characterised by means interconnecting a control means for controlling the sliding movement of the window glass (8) with the sealing element control means (36) whereby the sealing element (38) is moved into the sealing position when the window glass (8) is stationary and is moved into the non-sealing position when the window glass (8) is moving.

10. An arrangement according to any preceding claim, characterised in that the sealing element is a lip (38) extending substantially linearly along the said surface (8).

11. An arrangement according to any preceding claim, characterised in that the wiping element (44) extends substantially linearly along the said surface (8).

12. An arrangement according to any preceding claim, characterised by cleaning liquid dispensing means operable to dispense a supply of a cleaning liquid onto the said surface of the window glass (8) adjacent the wiping element (44).

13. An arrangement according to claim 12, characterised by means preventing operation of the cleaning liquid dispensing means unless the window glass (8) is in the closed position.

14. An arrangement according to claim 12 or 13 and mounted in the front door of a motor vehicle body, characterised in that the cleaning liquid dispensing means is positioned in the housing of an external rear view mirror mounted on or adjacent to the door.

15. An arrangement according to any one of claims 12 to 14, characterised in that the cleaning liquid dispensing means is carried by the wiping element (44).

16. An arrangement according to any preceding claim, characterised by electrical heating means mounted on the sealing element (38) and/or the wiping element (44).

## Patentansprüche

1. Dichtungs- und Reinigungsvorrichtung für eine bewegbare Fensterscheibe (8) mit einem Dichtungselement (38), das so angeordnet ist, um zwischen einer Dichtstellung, in welcher es abdichtend an der Fensterscheibe (8) anliegt, und einer nicht abdichtenden Stellung bewegbar zu sein, in welcher es nicht in einem abdichtenden Kontakt mit der Fensterscheibe (8) steht, einem angrenzend an die Oberfläche der Fensterscheibe (8) angeordneten Reinigungselement (44), das zwischen einer Reinigungsstellung, in der es in Reinigungskontakt mit der Fensterscheibe (8) steht, und einer Nichtreinigungsstellung bewegbar ist, in der es nicht in Reinigungskontakt mit der Fensterscheibe (8) steht und Regelelementen (36, 46), um das Dichtungselement (38) und das Reinigungselement (44) zwischen deren jeweiligen Stellungen zu verschieben,
**dadurch gekennzeichnet,**
daß die Regelelemente (36, 46) aus separaten Dichtungselementreglern (36) und Reinigungselementreglern (46) bestehen, die Dichtungselementregler (36) betreibbar sind, um das Dichtungselement (38) zwischen der Dicht- und Nichtdichtstellung zu verstellen, und die Reinigungselementregler (46) betreibbar sind, um das Reinigungselement (44) zwischen der Reinigungs- und der Nichtreinigungsstellung zu verstellen, wobei die Dichtungselementregler (36) und die Reinigungselementregler (46) wahlweise unabhängig voneinander betreibbar sind.

2. Vorrichtung nach Anspruch 1, dadurch gekennzeichnet, daß das Dichtungselement (38) elastisch an ein einen Hohlraum (36) bildendes Element angrenzend angeordnet ist, dessen Gestalt durch Änderung des Drucks eines sich darin befindlichen Fluids veränderbar ist, wobei ein Bauteil (40) das Dichtungselement (38) mechanisch mit einem Teil (34) verbindet, das sich als Reaktion auf die sich ändernde Gestalt des Hohlraums (36) bewegt, wodurch es eine mechanische Kraft auf das Dichtungselement (38) ausübt, um es um seinen elastischen Drehpunkt X zwischen der Dicht- und der Nichtdichtstellung zu bewegen, sowie dadurch, daß der Dichtungselementregler ein Bauteil umfaßt, um den Druck des Fluids in dem Hohlraum (36) zu verändern.

3. Vorrichtung nach Anspruch 2, dadurch gekennzeichnet, daß das Teil (34) eine elastische Wand des Hohlraums (36) bildet.

4. Vorrichtung nach einem der Ansprüche 1 bis 3, dadurch gekennzeichnet, daß das Reinigungselement (44) wahlweise angrenzend an ein einen Hohlraum (46) bildendes Element angeordnet ist, dessen Gestalt durch Änderung des Drucks eines sich darin befindlichen Fluids veränderbar ist, wobei ein Bauteil das Reinigungselement (44) mechanisch mit einem Bauteil (40) verbindet, das sich als Reaktion auf die sich ändernde Gestalt des Hohlraums (46) bewegt, wodurch es eine mechanische Kraft auf das Reinigungselement (44) ausübt, um es auf seiner elastischen Lagerung zwischen der Reinigungs- und der Nichtreinigungsstellung zu bewegen, sowie dadurch, daß der Reinigungselementregler ein Bauteil umfaßt, um den Druck des Fluids in dem Hohlraum (46) zu verändern.

5. Vorrichtung nach Anspruch 2 oder 3, dadurch gekennzeichnet, daß sich der Hohlraum (36) entlang der Länge des Dichtungselements (38) erstreckt.

6. Vorrichtung nach Anspruch 4, dadurch gekennzeichnet, daß sich der Hohlraum (46), an den angrenzend das Reinigungselement (44) angeordnet ist, entlang der Länge des Dichtungselements (38) erstreckt.

7. Vorrichtung nach Anspruch 5 oder 6, dadurch gekennzeichnet, daß einer oder jeder Hohlraum (36, 46) aus einem extrudierten Kunststoff- oder Gummimaterial besteht.

8. Vorrichtung nach Anspruch 1, dadurch gekennzeichnet, daß jeder der Dichtungselement-Reinigungselementregler (36, 46) elektrische oder magnetische Bauteile umfaßt.

9. Vorrichtung nach einem der Ansprüche 1 bis 8, gekennzeichnet durch ein Bauteil, das ein Kontrollelement zur Kontrolle der Schubbewegung der Fensterscheibe (8) mit dem Dichtungselementregler (36) verbindet, wodurch das Dichtungselement (38) in die dichte Stellung bewegt wird, wenn die Fensterscheibe (8) stillsteht und in die Nichtdichtstellung bewegt wird, wenn sich die Fensterscheibe (8) bewegt.

10. Vorrichtung nach einem der Ansprüche 1 bis 9, dadurch gekennzeichnet, daß das Dichtungselement eine Lippe (38) ist, die sich im wesentlichen geradlinig längs der Oberfläche der Fensterscheibe (8) erstreckt.

11. Vorrichtung nach einem der Ansprüche 1 bis 10, dadurch gekennzeichnet, daß sich das Reinigungselement (44) im wesentlichen geradlinig längs der Oberfläche der Fensterscheibe (8) erstreckt.

12. Vorrichtung nach einem der Ansprüche 1 bis 11, gekennzeichnet durch reinigungsflüssigkeitverteilende Bauteile, die so betreibbar sind, daß sie eine zugeführte Reinigungsflüssigkeit in der Nähe des Reinigungselements (44) auf der Oberfläche der Fensterscheibe (8) verteilen.

13. Vorrichtung nach Anspruch 12, gekennzeichnet durch Bauteile, die den Betrieb des die Reinigungsflüssigkeit verteilenden Bauteils verhindern, wenn die Fensterscheibe (8) sich nicht in der geschlossenen Position befindet.

14. Vorrichtung nach Anspruch 12 oder 13, die in der Vordertür einer Kraftfahrzeugkarosserie angeordnet ist, dadurch gekennzeichnet, daß das die Reinigungsflüssigkeit verteilende Bauteil in dem Gehäuse eines auf oder an der Tür befestigten Außenrückspiegels angeordnet ist.

15. Vorrichtung nach einem der Ansprüche 12 bis 14, dadurch gekennzeichnet, daß das Reinigungselement (44) das die Reinigungsflüssigkeit verteilende Bauteil trägt.

16. Vorrichtung nach einem der Ansprüche 1 bis 15, gekennzeichnet durch elektrische Heizelemente, die an dem Dichtungselement (38) und/oder dem Reinigungselement (44) angeordnet sind.

## Revendications

1. Ensemble d'étanchéité et d'essuyage pour vitrage mobile (8) de fenêtre, comprenant un élément d'étanchéité (38) monté afin qu'il se déplace entre une position d'étanchéité dans laquelle il est en contact étanche avec la surface du vitrage (8) et une position de non-étanchéité dans laquelle il n'est pas en contact étanche avec le vitrage (8) de la fenêtre, un élément d'essuyage (44) placé près de la surface du vitrage (8) et mobile entre une position d'essuyage dans laquelle il est en contact avec le vitrage et une position de non-essuyage dans laquelle il n'est pas en contact avec le vitrage, et un dispositif de commande (36, 46) d'éléments destiné à déplacer l'élément d'étanchéité (38) et l'élément d'essuyage (44) entre leurs positions respectives, caractérisé en ce que le dispositif de commande d'éléments comprend des dispositifs séparés de commande (36) d'élément d'étanchéité et de commande (46) d'élément d'essuyage, le dispositif (36) de commande d'élément d'étanchéité étant destiné à déplacer l'élément d'étanchéité (38) entre les positions d'étanchéité et de non-étanchéité et le dispositif (46) de commande d'élément d'essuyage étant destiné à déplacer l'élément d'essuyage (44) entre les positions d'essuyage et de non-essuyage, le dispositif (36) de commande de l'élément d'étanchéité et le dispositif (46) de commande de l'élément d'essuyage pouvant être commandés sélectivement indépendamment l'un de l'autre.

2. Ensemble selon la revendication 1, caractérisé en ce que l'élément d'étanchéité (38) est monté de manière flexible près d'un dispositif délimitant une chambre (36) dont la configuration peut être modifiée par modification de la pression du fluide à l'intérieur, et par un dispositif (40) de connexion métallique de l'élément d'étanchéité (38) à une partie (34) qui se déplace lors de la modification de configuration de la chambre creuse (36) afin qu'elle transmette une force mécanique à l'élément d'étanchéité (38) et provoque le déplacement de celui-ci dans son organe de montage flexible (X) entre les positions d'étanchéité et de non-étanchéité, et en ce que le dispositif de commande d'élément d'étanchéité comprend un dispositif de modification de la pression du fluide dans la chambre (36).

3. Ensemble selon la revendication 2, caractérisé en ce que ladite partie (34) est la paroi flexible de la chambre (36).

4. Ensemble selon l'une quelconque des revendications précédentes, caractérisé en ce que l'élément d'essuyage (44) est monté sélectivement près d'un dispositif délimitant une chambre (46) dont la configuration peut être modifiée par modification de la pression du fluide dans la chambre, et par un dispositif raccordant mécaniquement l'élément d'essuyage (44) à une partie (40) qui se déplace lors de la modification de la configuration de la chambre (46) de manière qu'une force mécanique soit transmise à l'élément d'essuyage (44) et provoque son déplacement sur son organe de montage flexible entre les positions d'essuyage et de non-essuyage, et en ce que le dispositif de commande de l'élément d'essuyage comporte un dispositif destiné à modifier la pression du fluide dans la chambre (46).

5. Ensemble selon la revendication 2 ou 3, caractérisé en ce que la chambre (36) est placée longitudinalement sur toute la longueur de l'élément d'étanchéité (38).

6. Ensemble selon la revendication 4, caractérisé en ce que la chambre (46) près de laquelle est monté l'élément d'essuyage (44) est disposée longitudinalement sur la longueur de l'élément d'étanchéité (38).

7. Ensemble selon la revendication 5 ou 6, caractérisé en ce que la chambre ou chaque chambre (36, 46) est formée de matière plastique ou de caoutchouc extrudé.

8. Ensemble selon la revendication 1, caractérisé en ce que chacun des dispositifs de commande d'élément d'étanchéité (36) et d'élément d'essuyage (46) comporte un dispositif électrique ou magnétique.

9. Ensemble selon l'une quelconque des revendications précédentes, caractérisé par un dispositif raccordant un dispositif de commande du mouvement de coulissement du vitrage (8) au dispositif (36) de commande d'élément d'étanchéité de manière que l'élément d'étanchéité (38) se déplace en position d'étanchéité lorsque le vitrage (8) est fixe et se déplace en position de non-étanchéité lorsque le vitrage (8) se déplace.

10. Ensemble selon l'une quelconque des revendications précédentes, caractérisé en ce que l'élément d'étanchéité est une lèvre (38) disposée pratiquement linéairement le long de ladite surface (8).

11. Ensemble selon l'une quelconque des revendications précédentes, caractérisé en ce que l'élément d'essuyage (44) est disposé linéairement le long de ladite surface (8).

12. Ensemble selon l'une quelconque des revendications précédentes, caractérisé par un dispositif de distribution d'un liquide de nettoyage destiné à distribuer un liquide de nettoyage à la surface du vitrage (8) près de l'élément d'essuyage (44).

13. Ensemble selon la revendication 12, caractérisé par un dispositif destiné à empêcher le fonctionnement du dispositif de distribution de liquide de nettoyage à moins que le vitrage (8) ne se trouve en position fermée.

14. Ensemble selon la revendication 12 ou 13, monté sur la porte avant d'une carrosserie de véhicule à moteur, caractérisé en ce que le dispositif de distribution de liquide de nettoyage est placé dans le boîtier d'un rétroviseur externe monté sur la porte ou près de celle-ci.

15. Ensemble selon l'une quelconque des revendications 12 à 14, caractérisé en ce que le dispositif de distribution de liquide de nettoyage est porté par l'élément d'essuyage (44).

16. Ensemble selon l'une quelconque des revendications précédentes, caractérisé par un dispositif de chauffage électrique monté sur l'élément d'étanchéité (38) et/ou l'élément d'essuyage (44).
